# EUROPÄISCHE PATENTANMELDUNG

(11) **EP 2 667 047 A1**
(43) Veröffentlichungstag der Anmeldung: **27.11.2013**
(21) Anmeldenummer: 12004019.1
(22) Anmeldetag: 23.05.2012
(51) Int. Cl.: F16C 33/38, F16C 33/46

(54) **Wälzlagerkäfig mit Einsätzen**

(71) Anmelder: IMO Holding GmbH, 91350 Gremsdorf (DE)
(72) Erfinder: Hubertus, Frank, 91315 Höchstadt (DE)
(74) Vertreter: Küchler, Stefan

(57) **Zusammenfassung**

Die Erfindung betrifft einen Wälzlagerkäfig (10), beispielsweise vorwiegend bestehend aus Stahl, für eine Drehverbindung (30) oder ein Wälzlager oder ein Großwälzlager mit mehreren Aufnahmen (300) für zylinderrollen-, oder kugel-, oder nadel-, oder kegel-, oder kegelrollenförmige Wälzkörper (100), wobei
wenigstens ein, vorzugsweise mehrere, zusätzliche Aufnahmemittel (80, 90), beispielsweise Materialaussparungen (80, 90) in Form von Bohrungen (80, 90), insbesondere in Form von Sacklochbohrungen (90) oder alternativ in Form von Durchgangsbohrungen (80), zur Aufnahme von Einsätzen (50).

## Beschreibung

Die Erfindung betrifft im Allgemeinen Drehverbindungen und Wälzlager des Maschinen- und Anlagenbaus, welche Wälzkörperkäfige, insbesondere Käfige für rollen-, kugel-, nadel-, tonnen- oder zylinderförmige Wälzkörper enthalten. Wälzlagerkäfige sind seit langer Zeit bekannt und Stand der Technik. Die Vorteile der vorgenannten Erfindung ergeben sich jedoch aus allen beschriebenen unabhängigen Hauptansprüchen und den jeweils zugehörigen abhängigen Patentansprüchen.

Herkömmliche Drehverbindungen und Wälzlager des Maschinen- und Anlagenbaus verfügen in der Regel über zwei gegeneinander verdrehbare konzentrische Ringe, zwischen denen die Wälzkörper in den sogenannten Wälzkörperlaufbahnen laufen. Das Wälzlager besteht im Wesentlichen und seit hinreichend bekanntem Stand der Technik (H. Roloff, W Matek (eds) ; 1976 ; Seiten 345-350*)* aus Ringen, dem Außenring und dem Innenring oder aus Scheiben (bei Axiallagern) mit Rollbahnen, zwischen denen die Wälzkörper abrollen. Die Wälzkörper sind meist in umlaufend aneinandergereihten Käfigsegmenten oder in einem einzigen komplett in dem Drehverbindungs-/Wälzlagerring umlaufenden Käfigteil eingefasst, um eine gegenseitige Berührung zu verhindern, einen gleichmäßigen Abstand zu halten und um den Wälzkörperkranz bei zerlegbaren Lagern zusammenzuhalten. Als Wälzkörper dienen beispielsweise kugel-, zylinder-, kegel-, tonnen- oder nadelförmige Elemente, welche zumeist härter sind als die Laufbahnen, in welchen sie abrollen.

Derartige Wälzlager und Drehverbindungen genügen nach Roloff-Matek im Wesentlichen einer von vornherein berechenbaren Lebensdauer und Verschleißlaufzeit beziehungsweise Gebrauchsdauer. Die eigentliche Berechnung der Wälzlager erfolgt auf Lebensdauer.

Gemäß den Erfahrungen aus der Praxis treten bei oder kurz vor Erreichen seiner errechenbaren Lebensdauer erste Ausbrüche in der Laufbahn des Lagers auf. Sobald dies geschieht und diese Schädigungen nicht auf irgend geartete Weise unverzüglich aus dem Laufbahnsystem entfernt werden können, werden die ausgebrochenen Partikel oder Elemente von den im Lager befindlichen Wälzkörpern überrollt, und somit beispielsweise an der überrollten Stelle noch stärker in die Laufbahn gepresst, oder aber ein Stück mitgeschliffen. Dies ist jeweils schädlich für die Unversehrtheit der Oberfläche der Laufbahn und sorgt bei Nichtentfemung der Partikel oder Elemente für Ungleichmäßigkeiten im Lauf. Als eine Folge dieser, im Vergleich zum unbeschädigten Zustand, ungleichmäßigere Beanspruchung der Lagerkomponenten wird die Lebensdauer des Wälzlagers verringert. Ursächlich hierfür ist in vielen Fällen mindestens ein schnell fortscheitender Schaden des Lagers beziehungsweise seiner Lagerkomponenten.

Die Ermüdung des Materiales und die darauffolgende Schädigung der Komponenten erfolgt auch durch die Ausbildung von Grübchen (sog. Pittings). Reines Abwälzen von Stahl auf Stahl (wie beispielweise beim Abrollen der Wälzkörper auf der Laufbahn) bewirkt zudem stets Hertzsche Pressung, die zur Grübchenbildung (sog. Pittingbildung) führen kann. Die Lebensdauerberechnung kann in der Regel mit speziell dafür ermittelten Wöhlerkurven oder anhand einschlägiger Berechnungsformeln erfolgen.

Häufig sind die Käfige von Wälzlagern als Stahlbandkäfige ausgeführt. Auch hier kann die Reibung von dem Stahlbandkäfig und dem Stahl des Laufbahnsystems zu Reibungen und zu schädlichem Abrieb führen, ähnlich den oben beschriebenen Fällen. Um einer Materialschwächung durch Abrieb vorzubeugen, werden in der Praxis breitere/ dickere Stahlbandkäfige verbaut, welche aufgrund des erhöhten Materialbedarfs jedoch zumeist schwerer sind. Breitere/ dickere Stahlbandkäfige bedürfen mehr Material und erhöhen folglich - proportional einhergehend mit der Gewichtserhöhung - auch die Gesamtkosten.

Die DE 102008026893 beispielsweise beschreibt einen allgemeinen Metallbandkäfig, wobei dort die Aufnahmetaschen für die vom Käfig zu führenden Wälzkörper mittels Feinstanzen eingebracht werden.

Ursächlich aus der Reibung von Stahl auf Stahl und den daraus resultierenden beschriebenen Nachteilen bei Verwendung eines Stahlbandkäfigs hinsichtlich Breite/Dicke, Materialbedarf und Kosten zu lösen ergibt sich die die vorliegende Erfindung initiierende Aufgabe, einen Stahlkäfig für Wälzlager zu schaffen, welcher weniger Material benötigt, bessere Gleitreibung mit dem Stahlwerkstoffen des Laufbahnsystems aufweist, leicht ist und weniger kostet.

Die Lösung der Aufgabe gelingt insbesondere dann, wenn ein Stahlkäfig 10 entsprechend der vorliegenden Erfindung eingesetzt wird. Der Erfindung folgend wird ein Stahlkäfig geringer Breite H verwendet, beispielsweise in den Größenordnungen 1 mm < H < 20 mm bis hin zu maximal 35 mm - je nach Größe des Wälzlagers beziehungsweise der Drehverbindung 30 und je nach Größe der durch den Stahlkäfig 10 aufzunehmenden Wälzkörper 100. Bevorzugt ist jedoch ein dünnwandiger Stahlkäfig 10 beispielsweise von 1 mm < H < 5 mm.

Der erfindungsgemäße Wälzlagerkäfig besteht dabei beispielsweise vorwiegend aus Stahl und ist für eine Drehverbindung oder ein Wälzlager oder ein Großwälzlager konzipiert mit dem parallelen Zweck, mehreren Aufnahmen für zylinderrollen-, oder kugel-, oder nadel-, oder kegel-, oder kegelrollenförmige Wälzkörper bereitzustellen.

Wenigstens ein, vorzugsweise mehrere, zusätzliche Aufnahmemittel sind in den erfindungsgemäßen käfig eingebracht. Diese Aufnahmemittel können beispielsweise Materialaussparungen in Form von Bohrungen oder insbesondere in Form von Sacklochbohrungen sein. Alternativ haben sich Aufnahmemittel in Form von Durchgangsbohrungen bewährt.

Jedes dieser Aufnahmemittel kann mindestens einen Einsatz beherbergen. Jeder dieser Einsätze kontaktiert mindestens entlang seines Bohrungsdurchmessers mit dem Wälzlagerkäfig .

Jeder dieser Einsätze kann lösbar oder unlösbar in den Wälzlagerkäfig verbunden sein. Der jeweilige Einsatz kann nach der Einbringung im jeweiligen Aufnahmemittel mechanisch mit dem Käfig verpresst sein. Alternativ sind die Einsätze ins jeweilige Aufnahmemittel einschraubbar.

In diesen Wälzlagerkäfig aus Stahl 10 werden entweder durchgängige Bohrungen 80 oder alternativ auch Sacklochbohrungen 90 an vordefinierten Stellen eingebracht.

Das Einbringen dieser Bohrungen 80 , 90 kann beispielsweise mittels Materialabtragung durch Laserstrahlbearbeitung erfolgen. Alternativ erfolgt das dieser Bohrungen durch Tiefziehen, Stanzen, Feinstanzen oder durch konventionelles spanabtragendes Verfahren wie beispielsweise durch Bohren.

Selbstverständlich ist der erfindungsgemäße Wälzlagerkäfig aus Stahl 10 dazu geeignet, in allen herkömmlichen mechanischen Lagern 30, beispielsweise Wälzlagern und Großwälzlagern, Drehverbindungen und Momentenlagern eingesetzt zu werden. Als Wälzkörper dieser Lager 30 dienen beispielsweise kugel-, zylinder-, kegel-, tonnen- oder nadelförmige Elemente, welche zumeist härter sind als die Laufbahnen 60, 70, in welchen sie abrollen.

Eine geringere Reibung des Stahlkäfigs 10 mit dem Laufbahnsystem 60, 70 wird insbesondere dadurch erreicht, dass in die Bohrungen 80 , 90 dieses Käfigs 10 separate Einsätze 50 aus Messing oder Kunststoff, oder aus einem anderen Eisen- oder Nichteisenmaterial mit geringeren Härtewerten als der Lagerstahl des Laufbahnsystems 60, 70, eingebracht werden. Diese Einsätze 50 haben die Eigenschaft, den Stahlkäfig 10 von der Anlauffläche des Laufbahnsystems 70 geeignet zu beabstanden.

Messing oder Kunststoff empfiehlt sich insbesondere deshalb als Werkstoff des Einsatzes 50, da Messing oder Kunststoff zum Einen leichter ist als Stahl und somit die aus der Aufgabe der Erfindung resultierende Gewichtsersparnis erreicht wird, und zum Anderen weil Messing oder Kunststoff weniger hart ist als die Stahlwerkstoffe der Laufbahn 60 bzw. des Laufbahnsystems 70, und somit bessere Gleiteigenschaften aufweisen. Durch diesen Unterschied in der Härte ergeben sich auch weniger gefährliche Stahlspäne, die in Laufbahn 60 bzw. im Laufbahnsystem 70 zu erhöhter Pittingbildung führen könnten.

Die Höhe der Beabstandung ist abhängig von der jeweils Überstehenden Höhe des Einsatzes H50. Praktisch gesehen sollten alle in den Stahlkäfig eingebrachten Einsätze 50 die gleiche Form, und insbesondere die gleiche überstehende Höhe H50 besitzen, um einen möglichst homogenen Lauf des Stahlkäfigs im Laufbahnsystem 70 zu gewährleisten.

Wichtig im Sinne der genannten Erfindung ist auch der Durchmesser des Überstehenden Teiles des Einsatzes D50. Dieser Durchmesser D50 sollte größer sein als der Bohrungsdurchmesser DB des Einsatzes 50, um die Gefahr des Hindurchrutschens des Einsatzes aus der Bohrung zu verringern.

Ebenso ist es vorteilhaft, wenn die Einsätze 50 durch entsprechende Sicherungsmaßnahmen im Stahlkäfig 10 fixiert werden. Insbesondere ein mechanisches Verpressen des jeweiligen Einsatzes 50 in der Bohrung 80 , 90 hat sich als vorteilhaft herausgestellt. Gleichbedeutend und gleichwertig denkbar sind auch formschlüssige Geometrien des jeweiligen Einsatzes 50, sodass aufgrund dieser Form/ Geometrie ein Lösen des Einsatzes aus dem Stahlkäfig 10 - beziehungsweise aus den Bohrungen 80 , 90 dieses Stahlkäfigs 10 unmöglich wird. In einer weiteren Ausgestaltungsform kann der Einsatz 50 mit dem Stahlkäfig 10 verschraubt werden, indem Stahlkafig 10 und Einsatz mit entsprechenden Gewindevorrichtungen versehen sind. Beispielsweise kann der Einsatz 50 über ein Außengewinde verfügen und der Stahlkäfig 10 über ein eingesetztes oder eingeschnittenes Innengewinde verfügen.

Ebenso vorteilhaft hat sich herausgestellt, wenn die Achsen der Bohrungen 80 , 90 können schräg/geneigt oder orthogonal in den Stahlkäfig 10 eingebracht sind.

Weiterhin vorteilhaft im Sinne der Erfindung erweist sich, wenn die Einsätze 50 auf beiden Seiten der Bohrung 80 , 90 ein gewisses Maß überstehen. Insbesondere empfiehlt es sich, diese Maß entsprechend der Überstehenden Höhe H50 zu wählen, weil dann die Einsätze auf beiden Seiten um ein identisches Maß ausragen. Dies ist insbesondere sinnvoll, um eine mittige Führung des Stahlkäfigs 10 in der Laufbahn 60 bzw. im Laufbahnsystem 70 zu erreichen.

Alternativ ist es jedoch auch denkbar und möglich, dass der jeweilige Einsatz 50 bündig mit dem Grund der Bohrung 80 , 90 abschließt, sodass sich nur ein einseitiger Überstand ergibt.

Der Überstand ist dabei grundsätzlich gleichzusetzen mit dem Hervorstehen des jeweiligen Einsatzes gegenüber der Oberfläche 200 einer Wälzlagerkäfigseite.

Der Wälzlagerkäfig aus Stahl 10 kann als "Endlosband" gefertigt werden. Wird ein solche entsprechende der vorliegenden Erfindung in einer Drehverbindung 30 oder in einem Lager 30 oder Großwälzlager 30 verwendet, so ist darauf zu achten die Stoßseite 20 des Wälzlagerkäfigs mit der gegenüberliegenden Stoßseite fluchtend zu gestalten, damit ein "Verlaufen" des Stahlkäfigs 10 in der Laufbahn vermieden wird

### Bezugszeichenliste:

| | | | | |
|---|---|---|---|---|
| 10 | Wälzlagerkäfig aus Stahl | | 100 | Wälzkörper |
| 20 | Stoßseite des Wälzlagerkäfigs | | H50 | Überstehende Höhe des Einsatzes |
| 30 | Drehverbindung/ Lager | | D50 | Durchmesser des Einsatz |
| 40 | Außenseite des Wälzlagerkäfig | | DB | Bohrungsdurchmesser des Einsatzes |
| 50 | Einsatz | | 200 | Oberfläche des Wälzlagerkäfigs |
| 60 | Laufbahn, (ggfs. gehärtet) | | 300 | Aufnahme für Wälzkörper |
| 70 | Laufbahnsystem | | H | Breite des Wälzlagerkäfigs |
| 80 | Aufnahmemittel: Durchgangsloch / Durchgangsbohrung | | 90 | Aufnahmemittel: Sackloch / Sackbohrung |

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen.

Dabei zeigen:
**Fig. 1** eine herkömmliche Drehverbindung mit Wälzlagerkäfig und mit Öffnungen für Wälzkörper in diesem Käfig,
**Fig. 2** ein beispielhaftes Segment des erfindungsgemäßen Wälzlagerkäfigs mit Einsätzen mit Aufnahmen/ Löcher für Wälzkörper, kennzeichnend die Stoßstelle am linken unteren Rand und aufweisend Durchgangsbohrungen zur Fixierung der Einsätze,

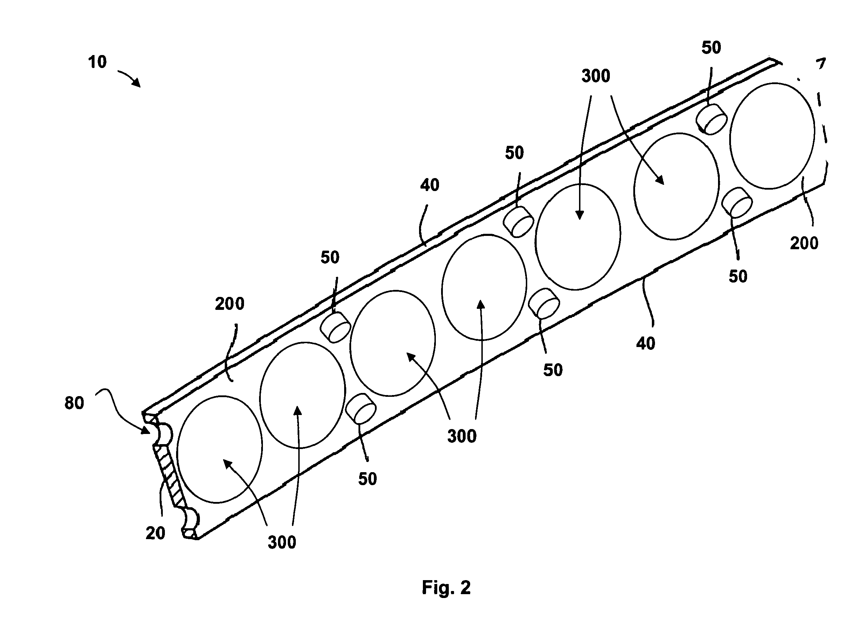

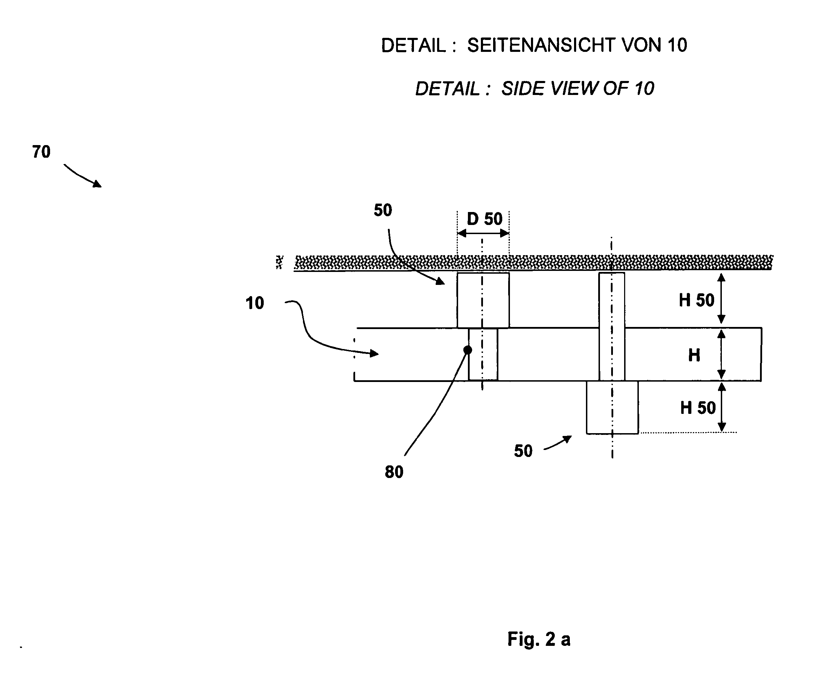

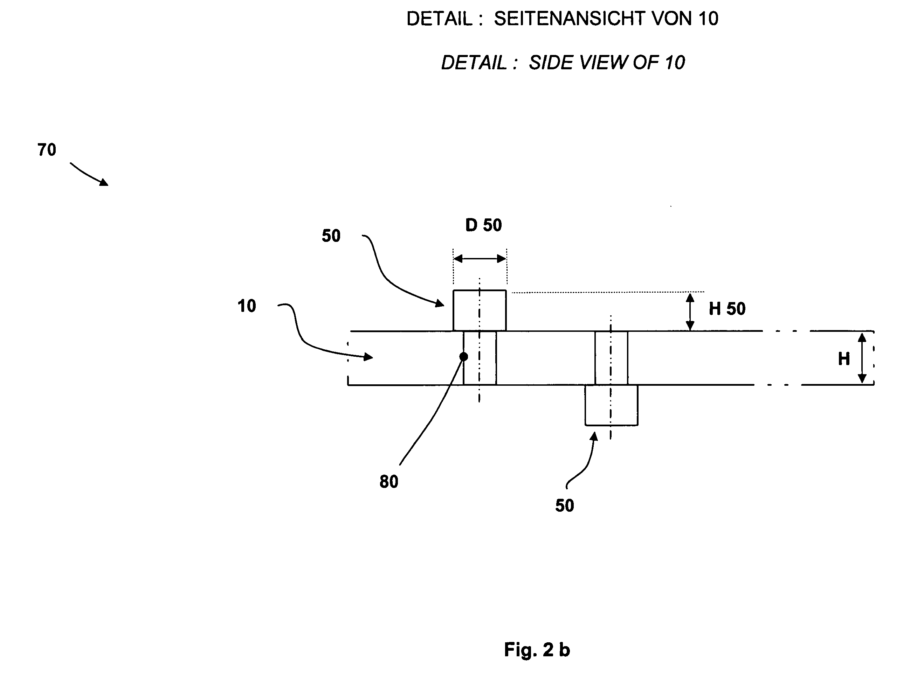

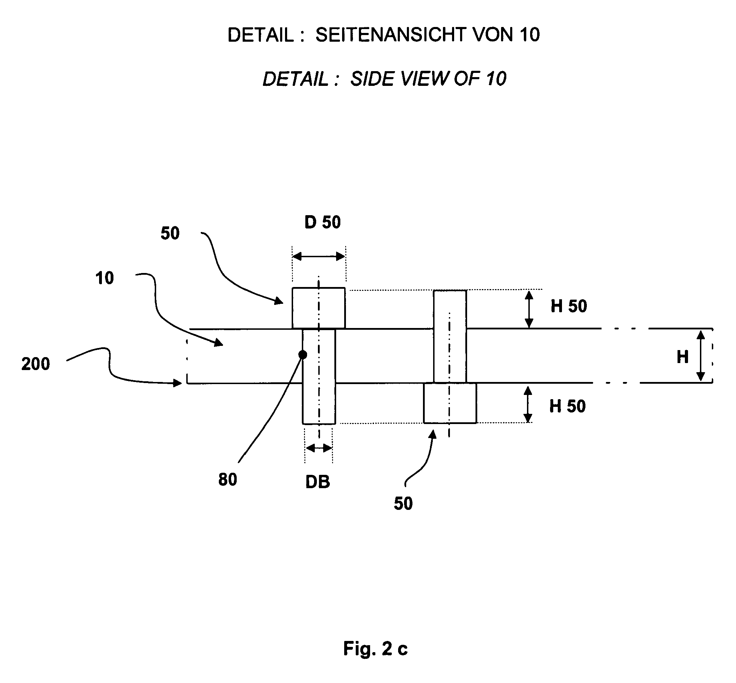

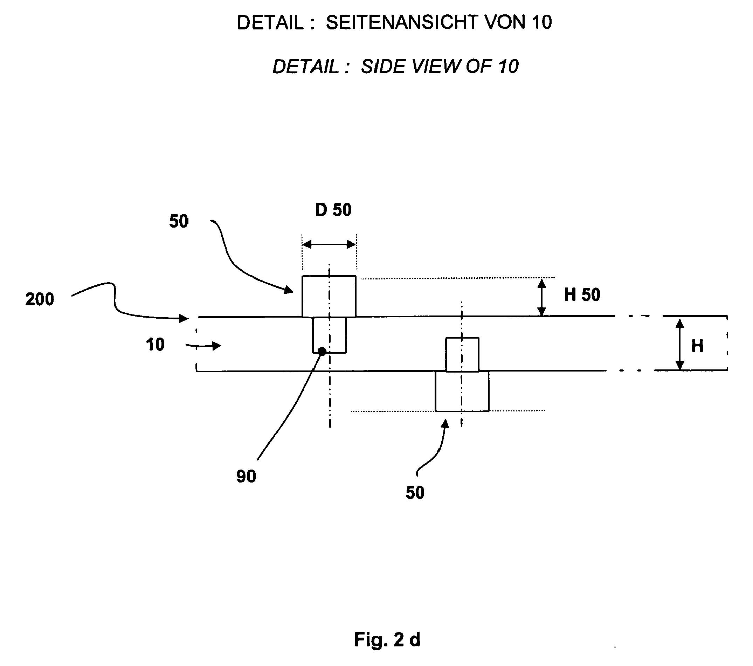

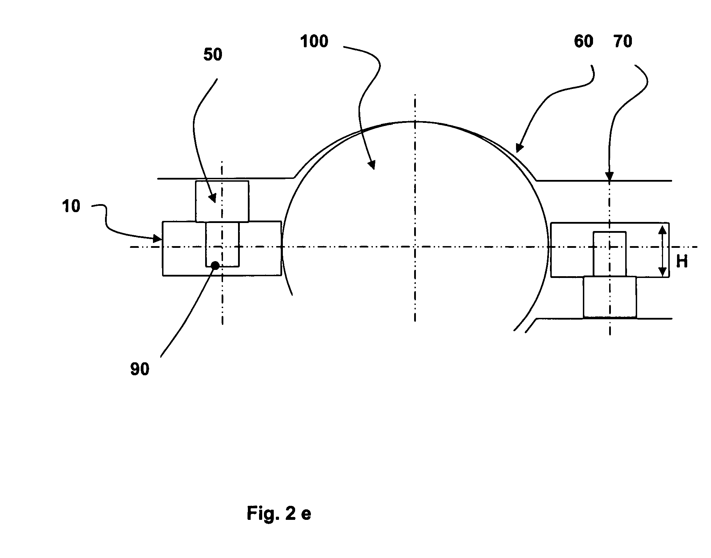

**Fig. 2 a** einen beispielhaften Ausschnitt eines Segments des erfindungsgemäßen Wälzlagerkäfigs mit Einsätzen, darstellend die Art und Weise wie Einsätze am Laufbahnsystem kontaktieren,
**Fig. 2 b** einen weiteren beispielhaften Ausschnitt eines Segments des erfindungsgemäßen Wälzlagerkäfigs mit Einsätzen, darstellend Einsätze, welche je nur auf einer Seite des Käfigs überstehen,
**Fig. 2 c** einen weiteren beispielhaften Ausschnitt eines Segments des erfindungsgemäßen Wälzlagerkäfigs mit Einsätzen, darstellend Einsätze, welche je an beiden Seiten des Käfigs gegenüber der Oberfläche des Wälzkörperkäfigs überstehen,
**Fig. 2 d** einen weiteren beispielhaften Ausschnitt eines Segments des erfindungsgemäßen Wälzlagerkäfigs mit Einsätzen, darstellend Einsätze, welche mittels Sacklochbohrungen in den Käfig eingebracht sind,
**Fig. 2 e** einen anderen beispielhaften Ausschnitt eines Segments des erfindungsgemäßen Wälzlagerkäfigs mit Einsätzen, darstellend die Position in welcher der erfindungsgemäße Wälzlagerkäfig im Laufbahnsystem geführt wird,

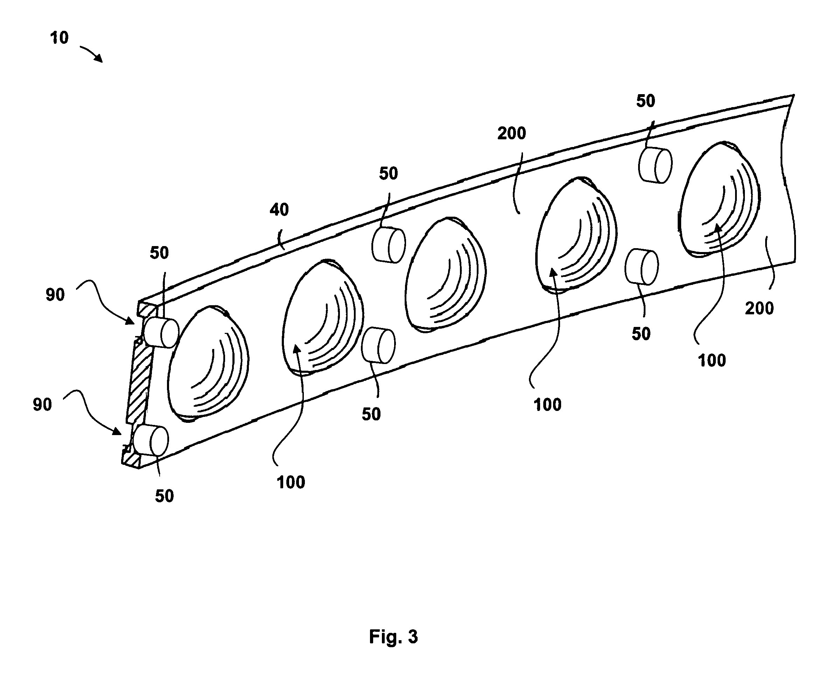

**Fig. 3** ein beispielhaftes Segment des erfindungsgemäßen Wälzlagerkäfigs mit Einsätzen mit Aufnahmen/ Löcher für Wälzkörper, kennzeichnend die Stoßstelle am linken unteren Rand und aufweisend Sacklochbohrungen zur Fixierung der Einsätze.

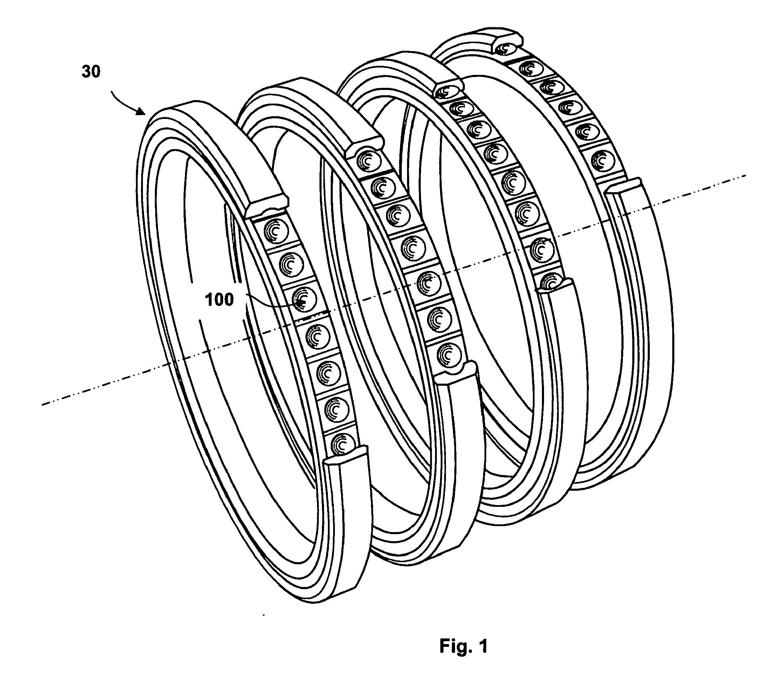

Fig. 1 zeigt beispielhaft einen herkömmlichen Wälzlagerkäfig (10) mit Aufnahmen in Form von Öffnungen oder Materialaussparungen für Wälzkörper (100), wobei diese Wälzkörper (100) im und durch den Käfig (10) geführt und beabstandet werden.

Fig.2 hingegen zeigt beispielhaft ebenso ein beispielhaftes Segment des erfindungsgemäßen Wälzlagerkäfigs (10), und ebenfalls in Seitenansicht, jedoch sind die Einsätzen (50) in Durchgangsbohrungen (80) eingebracht. Die Einsätze (50) werden in der Bohrung (80) je separat fixiert. Je Einsatz ist eine Bohrung (80) vonnöten. Fig. 2 zeigt ebenso Aufnahmen/ Löcher (300) für Wälzkörper (100). Gut erkennbar ist eine symmetrische Abfolge, mit welcher die Einsätze (50) über das Segment des Wälzkörperkäfigs (10) verteilt sind. Die Stoßstelle (20) des Käfigs (10) ist am linken unteren Rand dargestellt.

Fig.3 hingegen zeigt beispielhaft ein beispielhaftes Segment des erfindungsgemäßen Wälzlagerkäfigs (10), nun mit eingesetzten Wälzkörpern (100), und ebenfalls in Seitenansicht wie Fig. 2, jedoch sind die Einsätzen (50) in nicht durchgehenden Bohrungen, sondern in nur einseitig zugänglichen Bohrungen, den sogenannten Sacklochbohrungen (90) eingebracht.

Fig. 2 a zeigt beispielhaft einen Ausschnitt eines Segments des erfindungsgemäßen Wälzlagerkäfigs (10) mit Einsätzen (50), darstellend die Art und Weise wie Einsätze am Laufbahnsystem kontaktieren: Je eine Fläche des Einsatzes (50) kontaktiert am Laufbahnsystem (70) und zwar so, dass sich ein flächiger Kontakt ergibt. Durch diesen (flächen) körperlichen Kontakt des Einsatzes (50) mit dem Laufbahnsystem (70) wird der Käfig (10) relativ zentral positioniert und gleichermaßen vom Laufbahnsystem (70) beabstandet. Die Einsätze (50) können bevorzugtermaßen aus Messing oder Kunststoffen bestehen. Fig. 2 a zeigt beispielghaft, dass die Einsätze über unterschiedliche Länge verfügen können.

Fig. 2 b zeigt beispielhaft einen weiteren Ausschnitt eines Segments des erfindungsgemäßen Wälzlagerkäfigs (10) mit Einsätzen (50), darstellend Einsätze (50), welche je nur auf einer Seite des Käfigs überstehen, und zwar um jeweils die gleiche Höhe (H50). Verglichen mit der Breite (H) des Wälzkörperkäfigs (10) ist die Überstehende Höhe (H50) des Einsatzes von ähnlichem Betrag.

Fig. 2 c zeigt beispielhaft einen weiteren Ausschnitt eines solchen Segments in Seitenansicht. Hierbei sind jedoch an beiden Seiten des Käfigs (10) Einsätze (50) eingebracht, welche nicht nur einseitig, sondern beidseitig gegenüber der Oberfläche (200) des Wälzkörperkäfigs (100) überstehen, und zwar beidseitig um den gleichen Betrag (H50). Es ist erkennbar, dass auf der einen Seite des Wälzkörperkäfigs (100) die Einsatz-Durchmesser (DB) kleiner sein können als auf der gegenüberliegenden Seite. Diese Tatsache ist der Durchsteckbarkeit des Einsatzes (50) in die Bohrung (80) geschuldet.

Fig. 2 d zeigt beispielhaft, wie auch Fig. 2 c, einen weiteren beispielhaften Ausschnitt eines Segments des erfindungsgemäßen Wälzlagerkäfigs (10) mit Einsätzen (50), Jedoch sind hier kürzere Einsätze (50) dargstellt, welche mittels Sacklochbohrungen (90) in den Käfig (10) eingebracht sind.

Fig. 2 e zeigt beispielhaft, in einen anderen beispielhaften Ausschnitt eines Segments Position in welcher der erfindungsgemäße Wälzlagerkäfig (10) im Laufbahnsystem (70) geführt wird. Wie auch Fig. 2 a aufzeigt ist ebenso in Fig. 2 e erkennbar, dass die Einsätze (50) je an einer Fläche mit dem Laufbahnsystem (70) kontaktieren, um den Käfig von dem Laufbahnsystem (70) zu beabstanden und möglichst zentral und reibfrei zu führen.

## Patentansprüche

1. Wälzlagerkäfig (10), beispielsweise vorwiegend bestehend aus Stahl, für eine Drehverbindung (30) oder ein Wälzlager oder ein Großwälzlager mit mehreren Aufnahmen (300) für zylinderrollen-, oder kugel-, oder nadel-, oder kegel-, oder kegelrollenförmige Wälzkörper (100),
**gekennzeichnet durch**:
wenigstens ein, vorzugsweise mehrere, zusätzliche Aufnahmemittel (80, 90), beispielsweise Materialaussparungen (80, 90) in Form von Bohrungen (80, 90), insbesondere in Form von Sacklochbohrungen (90) oder alternativ in Form von Durchgangsbohrungen (80), zur Aufnahme von Einsätzen (50).

2. Wälzlagerkäfig (10) nach Anspruch 1
**gekennzeichnet dadurch, dass**
je ein Einsatz (50) mindestens entlang seines Bohrungsdurchmessers (DB) mit dem Wälzlagerkäfig (10) kontaktiert, gegebenenfalls ebenso mittels seines Durchmessers (D50) mit dem Wälzlagerkäfig (10) kontaktiert.

3. Wälzlagerkäfig (10) nach Anspruch 1
**gekennzeichnet dadurch, dass**
je ein Einsatz (50) pro Aufnahmemittel (80, 90) lösbar oder unlösbar in den Wälzlagerkäfig (10) eingebracht ist oder eingebracht werden kann, insbesondere wobei der jeweilige Einsatz nach der Einbringung im jeweiligen Aufnahmemittel mechanisch verpresst ist, alternativ wobei je ein Einsatz (50) ins jeweilige Aufnahmemittel (80, 90) einschraubbar ausgestaltet ist.

4. Wälzlagerkäfig (10) nach Anspruch 1
**gekennzeichnet dadurch, dass**
zusätzliche Aufnahmemittel (80, 90) wechselseitig in den Wälzlagerkäfig (10) eingebracht sind, beispielsweise beidseitig eingebracht sind, insbesondere in wiederkehrendem Muster.

5. Wälzlagerkäfig (10) nach Anspruch 1
**gekennzeichnet dadurch, dass**
zusätzliche Aufnahmemittel (80, 90) entweder orthogonal zur Oberfläche (200) des Wälzlagerkäfigs (100) in den Wälzlagerkäfig (100) eingebracht sind, oder geneigt zur Oberfläche (200) eingebracht sind.

6. Wälzlagerkäfig (10) nach Anspruch 1
**gekennzeichnet dadurch, dass**
zusätzliche Aufnahmemittel (80, 90) mittels Materialabtragung in den Wälzlagerkäfig (10) eingebracht sind, beispielsweise mittels Laserstrahlbearbeitung, alternativ durch Tiefziehen, Stanzen, Feinstanzen oder Bohren.

7. Wälzlagerkäfig (10) nach Anspruch 1
**gekennzeichnet dadurch, dass**
der Einsatz (50) je aus Messing oder aus Kunststoff besteht.

8. Wälzlagerkäfig (10) nach Anspruch 1
**gekennzeichnet dadurch, dass**
Einsätze (50) alternativ aus einem Eisen- oder Nichteinsenmetall bestehen mit geringeren Rockwell-Härtewerten als der Lagerstahl des Laufbahnsystems (60, 70) der zugehörigen Drehverbindung (30), d.h. HRC_{Einsatz} ≤ HRC_{Lagerstahl}

9. Wälzlagerkäfig (10) nach Anspruch 1
**gekennzeichnet dadurch, dass**
für mindestens einen im Wälzlagerkäfig (10) eingebrachten Einsatz (50) hinsichtlich dessen Rockwell-Härte beispielsweise gilt: HRC_{Einsatz} ≤ 60 , vorzugsweise gilt: HRC_{Einsatz} ≤ 50 , idealerweise gilt: HRC_{Einsatz} ≤ 40.

10. Wälzlagerkäfig (10), beispielsweise vorwiegend bestehend aus Stahl, für eine Drehverbindung (30) oder ein Wälzlager oder ein Großwälzlager mit mehreren Aufnahmen (300) für zylinderrollen-, oder kugel-, oder nadel-, oder kegel-, oder kegelrollenförmige Wälzkörper (100), wobei
mindestens ein in den Wälzlagerkäfig (10) eingebrachter Einsatz (50) die Oberfläche (200) des Wälzlagerkäfigs (10) überragt, beispielsweise um eine geeignete Höhe (H50) der Oberfläche (200) übersteht, wobei die überstehende Höhe (H50) geeignet ist den Wälzlagerkäfig (10) von der Laufbahn (60) zu beabstanden, während Einsatz (50) und Laufbahnsystem (70) zumindest zeitweise oder partiell kontaktieren, gegebenenfalls unter gleichzeitiger Reibung kontaktieren.
